# EUROPEAN PATENT APPLICATION

(11) **EP 4 239 191 A1**
(43) Date of publication of application: **06.09.2023**
(21) Application number: 22159894.9
(22) Date of filing: 03.03.2022
(51) Int. Cl.: F03D 17/00, F03D 80/00, F03D 7/02

(54) **LOAD SCHEDULING OF WIND TURBINE AUXILIARY DEVICES**

(71) Applicant: Siemens Gamesa Renewable Energy A/S, 7330 Brande (DK)
(72) Inventor: Alsig, Jens, 8653 Them (DK); Andersen, Claus, 7400 Herning (DK); Kjeldsen, Jens Christian, 7400 Herning (DK); Krøier, Kristian, 7400 Herning (DK); List, Dennis, 6715 Esbjerg N (DK)
(74) Representative: SGRE-Association

(57) **Abstract**

The invention describes a method of performing load scheduling for auxiliary devices (X1, ..., Xn) of a wind turbine (1), which auxiliary devices (X1, ..., Xn) are powered by an auxiliary power supply (11), which method comprises steps of monitoring the available current (I₁₁) from the auxiliary power supply (11); and, for any of a plurality of auxiliary devices (X1, ..., Xn): receiving a start request (X_ₒₙ); and approving the request to start that auxiliary device (X1, ..., Xn) when the available current (I₁₁) exceeds the start current for that auxiliary device (X1, ..., Xn); otherwise denying the request to start that auxiliary device (X1, ..., Xn). The invention further describes a wind turbine load scheduler (100, 12, 13) and a wind turbine (1) comprising such a load scheduler (100, 12, 13).

## Description

### Background

In addition to the generator and related components such as a converter, transformer etc., a wind turbine can comprise various auxiliary devices. For example, a wind turbine can be equipped with a climate control system with components that can be operated to maintain a desired climate in the interior space(s) of the wind turbine. Generally, such components comprise one or more motor-driven electrical devices. When the wind turbine is connected to the grid, these auxiliary devices can be powered by the grid. In an off-grid mode of operation, such auxiliary devices are powered by an auxiliary power supply. In a prior art system, the auxiliary power supply may be a diesel generator, and the maximum number of auxiliary devices that may be switched on simultaneously is generally determined only by the current limit of the fuse type used in the electrical network.

In order to monitor the climate at critical regions of the wind turbine, a wind turbine controller can receive input from air temperature sensors, surface temperature sensors, humidity sensors etc. The wind turbine controller switches on one or more modules of the climate control system in order to adjust the climate, for example to lower the generator temperature, to reduce the relative humidity, etc. The auxiliary power supply of such a prior art wind turbine must be able to cover the "worst case" scenario in which all auxiliary devices are being switched on essentially at the same time. Such an auxiliary power supply would need to have a rated current capacity that can cover the inrush currents of all auxiliary devices simultaneously. However, an auxiliary power supply with such current capability is very large, and adds significantly to the overall cost of energy of that wind turbine. Furthermore, much of the auxiliary power supply's capacity remains unused when the auxiliary devices are up and running, since the continuous current drawn by a motor-driven device is generally much lower than its inrush current.

It is therefore an object of the invention to provide an improved way of managing current consumption by auxiliary devices of a wind turbine.

This object is achieved by the claimed method of performing load scheduling for auxiliary devices of a wind turbine and by the claimed wind turbine load scheduler.

### Description

According to the invention, the method comprises steps of monitoring the available current from an auxiliary power supply and receiving a start request for any of a plurality of auxiliary devices. The method further comprises a step of approving a request to start an auxiliary device when the available current exceeds the start current for that auxiliary device, and a step of denying a request to start an auxiliary device when the available current does not exceed the start current for that auxiliary device.

In the context of the invention, the "available current from the auxiliary power supply" shall be understood as the momentary electrical current limit of the auxiliary power supply, i.e. the total electrical current that is available at that instant. At any one time, one or more previously switched-on auxiliary devices may already be drawing various quantities of continuous current. Equally, at any one time, one or more previously switched-on auxiliary devices may still be drawing inrush current.

An advantage of the invention is that an auxiliary device is only allowed to switch on if the auxiliary power supply can deliver enough electrical current to cover the inrush current of that auxiliary device in addition to the continuous current being drawn by any other devices being powered by the auxiliary power supply. The method repeats in an essentially endless "request management loop", continually comparing the available current to any new demand and either approving or denying the request if the demand cannot be covered. Since the total current load for the auxiliary device fluctuates over time, denial of a request to start may simply result in a delay until that auxiliary device can be switched on. In an exemplary situation, the wind turbine's yaw system may be actively yawing the nacelle when a request to start a pump motor of a cooling unit is received. As long as the yaw motors are drawing current, the auxiliary power supply of that wind turbine may be unable to cover the inrush current of the pump motor, and the request to start is denied. The request may be repeatedly denied for several iterations of the request management loop, until the yawing manoeuvre is complete. As soon as the auxiliary power supply is deemed able to cover the inrush current of the pump motor, the request to start is approved.

According to the invention, the wind turbine load scheduler comprises a monitoring means for monitoring the available current from an auxiliary power supply; and a request management module. For any one of a plurality of auxiliary devices, the request management module is configured to receive a start request; and either approve the request when the available current exceeds the start current for that auxiliary device or to deny the request to start when the available current does not exceed the start current for that auxiliary device.

As explained above, the total electrical current available at any one instant depends on the operational state of any previously switched-on auxiliary device, since one or more auxiliary devices may already be drawing various quantities of continuous current, and one or more auxiliary devices may still be drawing inrush current. The monitoring unit is configured to establish the quantity of electrical current available at any time instant. The request management module is configured to determine whether or not the available quantity of electrical current is sufficient to cover the inrush current of an auxiliary device for which a start request is received. If the available quantity of electrical current is sufficient to cover the inrush current of the requesting auxiliary device, the switch-on time can immediately follow the start request. If the available quantity of electrical current is not sufficient to cover the inrush current of the requesting auxiliary device, the switch-on time is delayed until the auxiliary power supply can cover the inrush current of the requesting auxiliary device.

The auxiliary power supply of a wind turbine can be any of a renewable power plant, a rechargeable battery, a diesel generator, etc. An advantage of the inventive ... is that the auxiliary power supply can be favourably small, since it is not necessary for the auxiliary power supply to cover the "worst case" scenario in which all auxiliary devices are switched on simultaneously. Such an auxiliary power supply would need to have a rated current capacity that is the sum of all inrush currents.

The invention further describes a wind turbine comprising (in addition to the generator, etc.) a plurality of auxiliary devices; an auxiliary power supply for providing power to the auxiliary devices; and an embodiment of the inventive load scheduler to perform the steps of the inventive method.

The object of the invention is also achieved by a computer program product with a computer program that is directly loadable into the memory of a control unit of a wind turbine, and which comprises program units to perform the steps of the inventive method when the program is executed by the control unit.

Particularly advantageous embodiments and features of the invention are given by the dependent claims, as revealed in the following description. Features of different claim categories may be combined as appropriate to give further embodiments not described herein.

The auxiliary power supply of a wind turbine can be any of: a renewable power plant; a rechargeable battery; a diesel generator. The auxiliary power supply can also combine two or more of the above, for example a wave energy converter arranged near an offshore wind turbine and configured to recharge a battery arranged in the wind turbine tower. In the following, without restricting the invention in any way, it may be assumed that an auxiliary device is a motor-driven device, and that the motor of the auxiliary device, when switched on, draws an inrush current that can be significantly greater than its continuous current. For example, a fixed-speed motor drive may draw an inrush current that is several times greater than its continuous current.

The expression "inrush current" shall be understood to mean the peak current that is drawn by the motor of an auxiliary device when it is switched on. The terms "inrush current", "peak current" and "inrush demand" shall be understood to be synonyms and may be used interchangeably herein.

The expression "continuous current" shall be understood to mean the current drawn by that auxiliary device during normal operation. The terms "continuous current", "steady-state current" and "steady-state demand" shall be understood to be synonyms and may be used interchangeably herein.

In a preferred embodiment of the invention, the request management module can be configured to consult a look-up table with the inrush current demand and continuous current demand for each auxiliary device. Such a look-up table can be established by the collecting information from the various manufacturers and/or from empirical data. According to the invention, the wind turbine load scheduler comprises a monitoring means for monitoring the available current from the auxiliary power supply. This can be established by subtracting the known current demand from any operational auxiliaries from the known rated capacity of the auxiliary power supply. At any one time, therefore, the wind turbine load scheduler knows how much current is available and also how much current will be required when a requesting auxiliary device is switched on.

In a preferred embodiment of the invention, the auxiliary power supply of the wind turbine has a rated current capacity that covers the continuous current demand of all auxiliary devices, and an inrush current demand of less than all auxiliary devices. In a particularly preferred embodiment, the rated current capacity of the auxiliary power supply covers the continuous current demand of all auxiliary devices, and the inrush current demand of at most two auxiliary devices. The rated current capacity of the auxiliary power supply may also include a safety margin to cover small unforeseen variations in the power consumption of an active auxiliary device.

Each motor of an auxiliary device of a wind turbine may be assumed to have a power rating depending on its purpose. For example, a yaw drive motor may be significantly more powerful than the fan motor of a ventilation system. Therefore, the various motors of the auxiliary devices can be expected to draw different inrush currents when switched on. Similarly, the continuous current demands of the various motors may be significantly different. Therefore, in a preferred embodiment of the invention, the method comprises an initial step of determining the maximum inrush current required by each auxiliary device and the minimum continuous current required by each auxiliary device.

The relevance of an auxiliary device of a wind turbine may depend on various factors, for example the wind turbine's mode of operation, the momentary wind conditions, etc.

Therefore, in a further preferred embodiment of the invention, the method comprises a step of establishing a ranking or hierarchy of priorities for the auxiliary devices. Preferably, this hierarchy is adjusted according to the operational mode of the wind turbine. For example, during an off-grid mode and high wind speeds, the motors of the yaw system may be accorded high priority so that the rotor can always be turned into the wind in order to avoid structural damage to the wind turbine. Equally, in preparation to restarting the wind turbine after a prolonged shut-down state, highest priority may be given to the fan motor(s) of a dehumidifier arrangement so that moisture can be removed from critical interior spaces of the wind turbine. In a preferred embodiment of the invention, approval of a start request is given on the basis of the rank of that auxiliary device in the hierarchy. Of course, such a ranking or hierarchy of priorities may be adjusted in response to changes in the operating conditions and/or weather conditions.

The capacity of a temporary auxiliary power supply may be insufficient to cover the steady-state current demands of all auxiliaries of a wind turbine. Equally, during an off-grid mode, the capacity of an auxiliary power supply may deplete over time. For example, the a battery may have decreasing levels of charge; a diesel generator may be low on fuel. Therefore, in a preferred embodiment of the invention, the method comprises a step of increasing the available current by reducing the current consumption of a number of already active auxiliary devices. For example, an auxiliary device may be switched off in order to allow a requesting auxiliary device to be switched on. If the request management module applies a hierarchy of priorities as described above, the auxiliary device with the lowest priority can be switched off.

Alternatively, in a further preferred embodiment of the invention, the required quantity of current may be "freed up" by running variable-speed motors of one or more active auxiliary devices at a lower speed. For example, the pump motor of a fluid cooling system and/or the fan motor of a climate control system may be run at their lowest speeds in order to allow a pitch motor to be switched on.

At any one time, the request management module knows which auxiliary devices are on, and in which state (e.g. whether an auxiliary device is already in a steady-state mode). The request management module can therefore determine the available current by subtracting the total demand of the already active auxiliary devices from the momentary current capacity of the auxiliary power supply. When a new start request is received, the request management module then compares the inrush demand of the requesting auxiliary device to the available current in order to decide whether or not the requesting auxiliary device can be started immediately.

For various reasons, the inrush demand and/or the steady-state demand of an auxiliary device may change during the lifetime of that auxiliary device. Therefore, in a preferred embodiment of the invention, the wind turbine load scheduler comprises a correction module configured to adjust the start current value and the continuous current value of an auxiliary device on the basis of the consumed lifetime of that auxiliary device.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an exemplary embodiment of the inventive wind turbine;
Figure 2 and Figure 3 show flowcharts to illustrate steps of the inventive method;
Figure 4 shows demand curves during implementation of the inventive method;
Figure 5 illustrates the rated capacity of an auxiliary power supply as used in an exemplary embodiment of the inventive wind turbine;
Figure 6 illustrates the rated capacity of an auxiliary power supply as used in a prior art wind turbine.

In the diagrams, like numbers refer to like objects throughout. Objects in the diagrams are not necessarily drawn to scale.

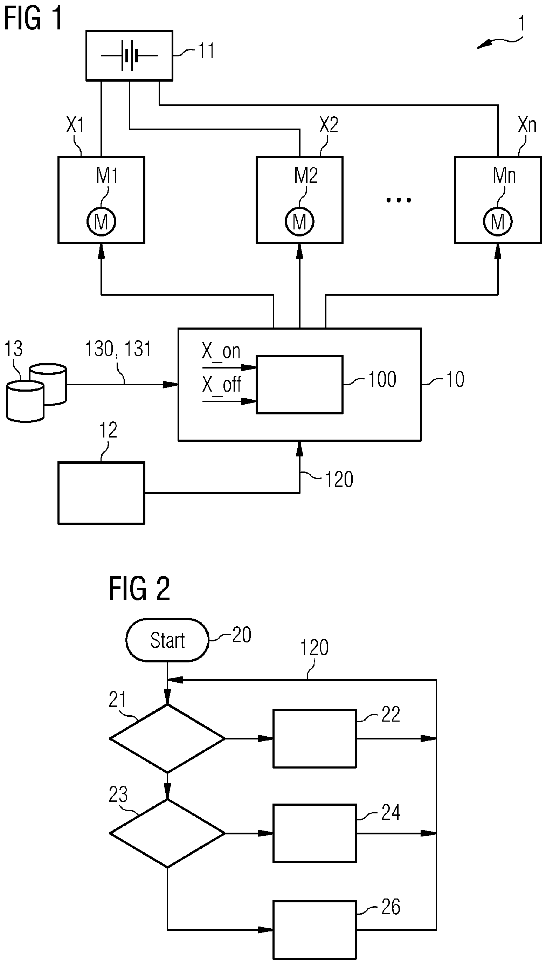

Figure 1 is a block diagram of an exemplary embodiment of the inventive wind turbine 1, showing only the aspects relevant to the invention (the usual wind turbine configuration may be assumed, with a generator installed in a nacelle or canopy mounted on top of a tower). The diagram shows a number of motor-driven auxiliaries X1, ..., Xn arranged at various locations in the wind turbine 1. An auxiliary power supply 11 (which can comprise any configuration of backup power supplies) is provided to supply motors M1, ..., Mn of the auxiliaries X1, ..., Xn with electrical power during an off-grid mode. Otherwise, in this exemplary embodiment, it is assumed that the wind turbine is grid-connected. The diagram also shows a wind turbine controller 10, which can be local to the wind turbine or at a remote location. During any of various operation modes, the wind turbine controller 10 determines whether an auxiliary device X1, ..., Xn is needed, and issues a switch-on request xx for that aux. The wind turbine controller 10 also determines whether an auxiliary device X1, ..., Xn is no longer needed, and issues a switch-off request xx for that aux. A request management module xx receives the requests and schedules the switching actions according to the current demand.

The diagram also shows a memory 13, for example a look-up table (LUT), which provides the wind turbine controller 10 with information 130 regarding the current requirements of the various auxiliaries X1, ..., Xn. In this exemplary embodiment, the LUT 13 can maintain a list with the inrush current and continuous current required for each auxiliary X1, ..., Xn. The diagram also shows a monitoring means 12 which maintains a running estimate 120 of the electrical current available to the auxiliaries X1, ..., Xn, i.e. the "available current".

The function of the monitoring means 12 is illustrated in Figure 2, which shows an exemplary flowchart. The decision-making process commences at stage 20, and can be triggered by any change in the power supply status, for example when the wind turbine 1 changes from an on-grid state to an off-gird state; when a component of the auxiliary power supply 11 becomes available or unavailable, etc. In this exemplary situation, the auxiliary power supply 11 is assumed to comprise an external generator (e.g. a diesel generator) as well as a backup battery.

At stage 21, the monitoring means 12 checks whether auxiliary power is being supplied by the external generator. If yes, the current limit 120 is defined by the current capacity of the generator, and the value of available current is set in stage 22. If no, the method proceeds to stage 23. Here, the monitoring means 12 checks whether auxiliary power is being supplied by the backup battery. If yes, the current limit is defined by the current capacity I_{11_max} of the backup battery, and the value of available current 120 is set in stage 24. If no, the method proceeds to stage 25. The monitoring means 12 concludes that auxiliary power is being provided by the grid, so that the value of available current 120 is only limited by design constraints of the electrical systems (e.g. a maximum fuse current rating).

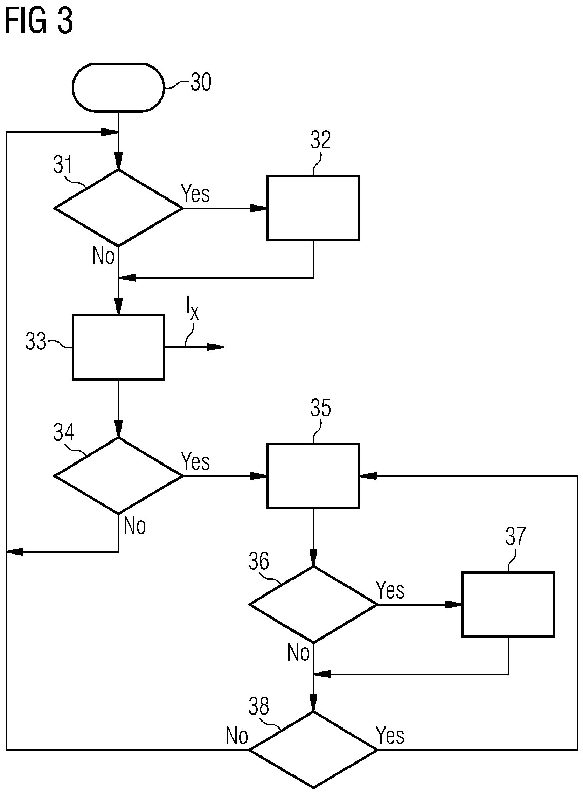

With this information, the wind turbine controller 10 of Figure 1 can schedule the auxiliaries in an optimal manner. Figure 3 is a exemplary flowchart to illustrate steps of the inventive method. The request management module xx follows a control loop which commences at stage 30, for example after commissioning the wind turbine. For any of the auxiliaries X1, ..., Xn shown in Figure 1, the request management module 100 can receive a switch-off request X_{_off} or a switch-on request X_{_on} at any time. In step 31, any request to switch off a motor can be followed by the appropriate action in step 32. The momentary current demand I_{X} - i.e. the total continuous current being consumed by the already active auxiliaries - is then updated in step 33. In step 34, the request management module 100 examines the switch-on requests. In the absence of any requests, the control loop resumes at stage 31. If there is one or more switch-on request X_on, the control loop proceeds to step 35, and the highest-ranking request is dealt with first. The next step 36 assesses whether the available current 120 is sufficient to cover the inrush and steady-state current demand of the requesting auxiliary device in addition to the current demand I_{X} of the already active auxiliaries. If yes, that auxiliary device is switched on in step 37. If not, the control loop proceeds to step 38, in which the request management module 100 checks to see if there are further requests to switch on an aux. If yes, the control loop returns to step 35. If not, the control loop returns to step 31.

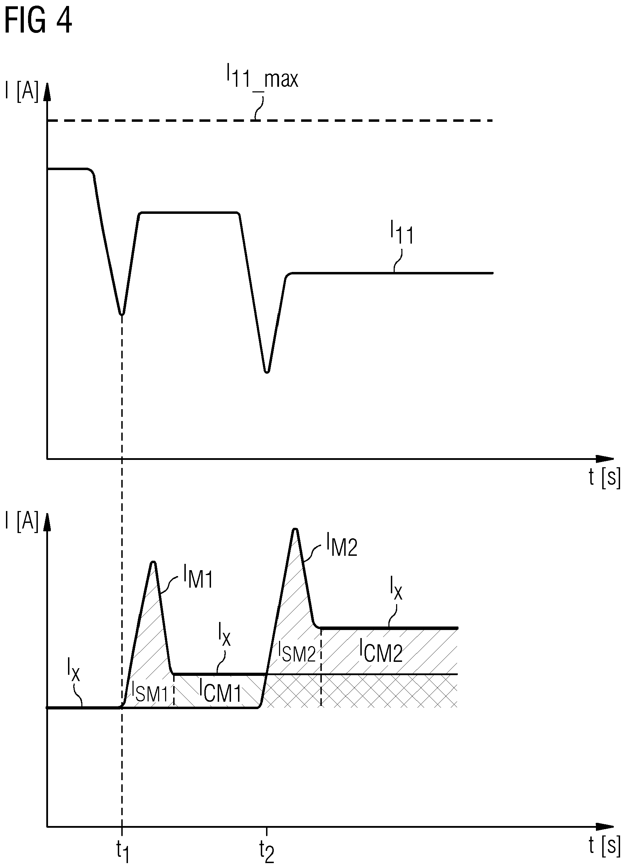

Figure 4 shows simplified current capacity I₁₁ of the auxiliary power supply 11 (relative to its rated current I_{11_max}) and current demand I_{X} for auxiliaries of the wind turbine of Figure 1. Initially, various auxiliaries are on and the current demand I_{X} is relatively low. At time t1, two requests are received by the request management module 100 to switch on auxiliary X1 and auxiliary X2. The request management module 100 knows that the available current I11 is unable to cover both inrush demands I_{SM1}, I_{SM2} of the requesting auxiliaries X1, X2. In this exemplary embodiment, auxiliary device X1 ranks higher than auxiliary device X2, and is allowed to switch on at time t1. The diagram indicates the initial inrush peak ISM1 and the subsequent steady state demand I_{CM1} of auxiliary device X1, which raises the total current demand IX to a higher level. Correspondingly, the current capacity of the auxiliary power supply 11 drops as shown in the upper part of the diagram.

Following the control loop explained in Figure 3, the request management module 100 then calculates whether the second auxiliary device X2 may be switched on. Here, the momentary current demand Ix sees that the available current I₁₁ can now cover the inrush demand I_{SM2} of the second requesting auxiliary device X2 and allows that auxiliary device to switch on at time t₂.

With this approach to load scheduling, an auxiliary power supply such as a backup battery, diesel generator etc., can have a favourably low rated capacity and is therefore less expensive. Particularly in the case of a large offshore wind farm with many wind turbines, the accumulated reduction in costs can be significant.

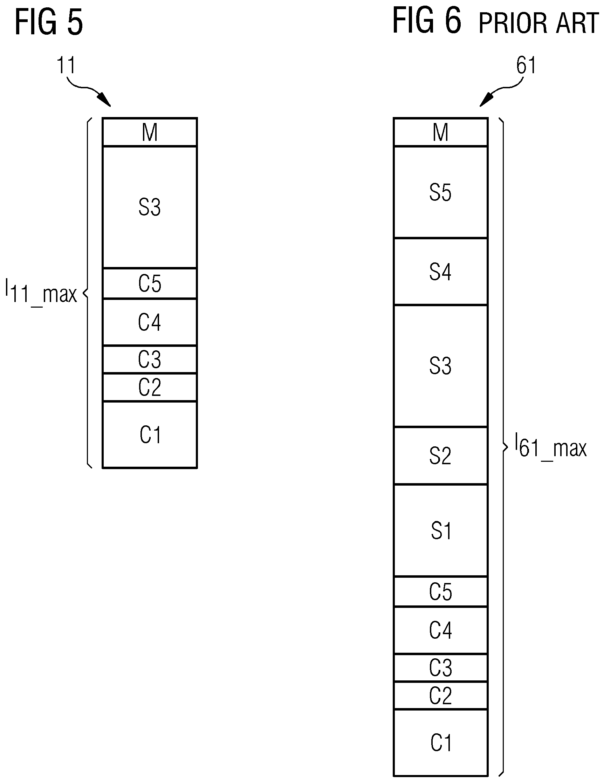

Figure 5 is a schematic representation of the capacity of an auxiliary power supply 11 for a wind turbine according to the invention, required to supply auxiliary power to five auxiliary devices X1, ..., X5. The rated current capacity I_{11_max} of the auxiliary power supply 11 can comprise the total continuous current demands C1 - C5 of the five auxiliaries, and the largest start current, in this case start current S3. A safety margin M is included. The start currents of the other devices are lower than this maximum start current S3. In the event that several devices request to be switched on at the same time, the request management module 100 schedules the switch-on times so that the auxiliary power supply can always cover the accumulated demand and the new demand.

Figure 6 is a schematic representation of the capacity of an auxiliary power supply 61 for a prior wind turbine, required to supply auxiliary power to the five auxiliaries of Figure 5. The rated current capacity I_{61_max} of the auxiliary power supply 61 must cover the total continuous current demands C1 - C5 and also the total start current demands S1 - S5 of the five auxiliaries, to be able to cover the demand in the worst case scenario in which all five auxiliaries request to be switched on at the same time.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A method of performing load scheduling for auxiliary devices (X1, ..., Xn) of a wind turbine (1), which auxiliary devices (X1, ..., Xn) are powered by an auxiliary power supply (11), which method comprises steps of
- monitoring the available current (I₁₁) from the auxiliary power supply (11); and, for any of a plurality of auxiliary devices (X1, ..., Xn):
- receiving a start request (X_{_on}); and
- approving the request to start that auxiliary device (X1, ..., Xn) when the available current (I₁₁) exceeds the start current for that auxiliary device (X1, ..., Xn); otherwise
- denying the request to start that auxiliary device (X1, ..., Xn).

2. A method according to the preceding claim, comprising an initial step of determining the start current required by each auxiliary device (X1, ..., Xn) and the continuous current required by each auxiliary device (X1, ..., Xn).

3. A method according to any of the preceding claims, comprising a step of establishing a priority for each auxiliary device (X1, ..., Xn).

4. A method according to any of the preceding claims, wherein approval of a start request (X_{_on}) is given on the basis of the priority of that auxiliary device (X1, ..., Xn).

5. A method according to any of the preceding claims, comprising a step of increasing the available current (I₁₁) by reducing the current consumption of a number of auxiliary devices (X1, ..., Xn).

6. A method according to any of the preceding claims, comprising a step of increasing the available current (I₁₁) by switching off a number of auxiliary devices (X1, ..., Xn).

7. A method according to any of the preceding claims, wherein the available current (I₁₁) is determined from the current capacity (I_{11_max}) of the auxiliary power supply (11) and the momentary current consumption (I_{X}) of auxiliary devices (X1, ..., Xn).

8. A wind turbine load scheduler (100, 12, 13), comprising
- a monitoring means (12) for monitoring the available current (I₁₁) from an auxiliary power supply (11); and
- a request management module (100) configured to
- receive a start request (X_{_on}) for any of a plurality of auxiliary devices (X1, ..., Xn);
- approve a request to start an auxiliary device (X1, ..., Xn) when the available current (I₁₁) exceeds the start current for that auxiliary device (X1, ..., Xn);
- denying a request to start an auxiliary device (X1, ..., Xn) when the available current (I₁₁) does not exceed the start current for that auxiliary device (X1, ..., Xn).

9. A wind turbine load scheduler according to the preceding claim, comprising a current requirement table (130) in which each table entry lists the start current and the continuous current for an auxiliary device (X1, ..., Xn).

10. A wind turbine load scheduler according to any of claims 8 to 9, comprising a rank table (131) in which the auxiliary devices (X1, ..., Xn) are ranked in order of priority.

11. A wind turbine load scheduler according to any of claims 8 to 10, comprising a correction module configured to adjust the start current value and the continuous current value of an auxiliary device (X1, ..., Xn).

12. A wind turbine (1) comprising at least
- a plurality of auxiliary devices (X1, ..., Xn);
- an auxiliary power supply (11) for providing power to the auxiliary devices (X1, ..., Xn); and
- a load scheduler (100, 12, 13) according to any of claims 8 to 11 to perform steps of the method according to any of claims 1 to 7.

13. A wind turbine according to the preceding claim, wherein the rated current capacity (_{I11_max}) of the auxiliary power supply (11) corresponds to the combined continuous currents of the auxiliary devices (X1, ..., Xn).

14. A wind turbine according to any of claims 12 to 13, wherein an auxiliary device is any of: a pump motor (M1) of a climate control module (X1); a fan motor (M2) of a climate control module (X2); a drive motor (M3) of a hydraulic system (X3); a yaw drive motor; a pitch drive motor.

15. A computer program product comprising a computer program that is directly loadable into a memory of a control unit (10) of a wind turbine (1) according to any of claims 12 to 14 and which comprises program elements for performing steps of the method according to any of claims 1 to 7 when the computer program is executed by the control unit (10).
